# EUROPÄISCHE PATENTSCHRIFT

(11) **EP 3 975 918 B1**
(45) Veröffentlichungstag und Bekanntmachung des Hinweises auf die Patenterteilung: **14.08.2024**
(21) Anmeldenummer: 20726045.6
(22) Anmeldetag: 12.05.2020
(51) Int. Cl.: A61C 7/08

(54) **SATZ VON KORREKTURVORRICHTUNGEN ZUM DURCHFÜHREN EINER KIEFERORTHOPÄDISCHEN MASSNAHME**
SET OF CORRECTION DEVICES FOR CARRYING OUT AN ORTHODONTIC INTERVENTION
ENSEMBLE DE DISPOSITIFS DE CORRECTION PERMETTANT LA MISE EN OEUVRE D'UNE INTERVENTION ORTHODONTIQUE

(30) Priorität: 30.05.2019 DE 102019114593
(43) Veröffentlichungstag der Anmeldung: 06.04.2022
(73) Patentinhaber: K Line Europe GmbH, 40589 Düsseldorf (DE)
(72) Erfinder: KANDIL, Sherif, 40474 Düsseldorf (DE)
(74) Vertreter: Rätsch, Caroline
(86) Internationale Anmeldenummer: PCT/EP2020/063167
(87) Internationale Veröffentlichungsnummer: WO 2020/239429

(56) Entgegenhaltungen:
- DE-A1- 102015 108 848
- DE-A1- 102017 009 287
- US-A1- 2009 191 502

## Beschreibung

Die Erfindung betrifft einen Satz von kieferorthopädischen Korrektureinrichtungen.

Die Erfindung ist insbesondere gerichtet auf so genannte Clear Aligner. Hierbei handelt es sich um transparente Zahnschienen aus Kunststoff, die mindestens einen Teil eines Gebisses in mehreren Schritten von einer Ist-Stellung in eine korrigierte Soll-Stellung bringen sollen. Bei der Ist-Stellung handelt es sich um die initiale Fehlstellung des Teils des Gebisses. Die Soll-Stellung ist die gewünschte Stellung. Bei dem Teil des Gebisses kann es sich um einen oder mehrere Zähne des Gebisses oder um das gesamte Gebiss handeln.

Zur Anfertigung der kieferorthopädischen Korrekturvorrichtungen wird zunächst ein Modell des Ist-Zustands des Gebisses angefertigt, das die Grundlage der weiteren Planung bildet. Das Modell kann ein konventionelles Gipsmodell oder ein digitales 3D-Modell sein. Zur Erstellung eines digitalen 3D-Modells kann das Gebiss des Patienten oder ein zuvor angefertigtes konventionelles Gipsmodell gescannt werden. Geeignete 3D-Scanner und Computerprogramme zur Verarbeitung der mittels der 3D-Scanner erfassten Daten sind aus dem Stand der Technik bekannt. Ferner muss das Behandlungsziel, das heißt ein zu erreichender (korrigierter) Soll-Zustand definiert werden. Der Soll-Zustand wird ebenfalls in einem 3D-Modell festgehalten. Sofern für die Zahnregulierung Zahnschienen - Clear Aligner - zum Einsatz kommen, werden zwischen dem initialen Ist-Zustand und dem korrigierten Soll-Zustand Zwischenschritte errechnet und auf Grundlage dieser Zwischenschritte aufeinander abgestimmte Zahnschienen hergestellt. Diese Zahnschienen werden jeweils eine begrenzte Zeit getragen und bewegen das Gebiss schrittweise in die korrigierte Soll-Stellung. Bei jedem Zwischenschritt wird eine neue Zahnschiene verwendet, bis nach der letzten Schiene die korrigierte Soll-Stellung erreicht ist. Eine derartige Vorgehensweise ist beispielsweise aus der DE 10 2015 108 848 A1 oder der US 2009/0191502 A1 bekannt.

Ein anderer Anwendungsbereich der Erfindung sind feste Zahnspangen. Diese weisen an den Zähnen befestigte "Brackets" auf, in die ein Drahtbogen eingelegt ist. Durch den Drahtbogen werden Zug- und/oder Druckkräfte auf die Zähne aufgebracht. Sofern im Rahmen der Erfindung von Korrekturvorrichtungen gesprochen wird, handelt es sich bei den vorgenannten Zahnspangen um den Drahtbogen, der auch mehrteilig sein kann. Die kieferorthopädische Maßnahme erfolgt also in mehreren Schritten. Jede Korrekturvorrichtung ist dabei mindestens einem Schritt zugeordnet.

Die vorbeschriebene kieferorthopädische Maßnahme hat sich grundsätzlich bewährt. Allerdings wurde in einigen Fällen gefunden, dass es nicht zu dem gewünschten Behandlungserfolg kommt.

Untersuchungen haben ergeben, dass es während der Behandlung zu einer Spannungsrelaxation oder Ermüdungserscheinungen der Korrekturvorrichtung kommen kann. Auch wurde festgestellt, dass die kieferorthopädische Maßnahme bei unterschiedlichen Patienten unterschiedliche biologische Reaktionen hervorruft. Dies kann jeweils einen negativen Einfluss auf die Qualität der Behandlung haben.

Vor diesem Hintergrund liegt der Erfindung die Aufgabe zugrunde, die bekannten kieferorthopädischen Maßnahmen zu verbessern.

Diese Aufgabe wird gelöst durch einen Satz von kieferorthopädischen Korrekturvorrichtungen mit den Merkmalen des Anspruchs 1. Mittels der Korrekturvorrichtungen soll mindestens ein Teil eines Gebisses in mehreren Schritten in eine korrigierte Soll-Stellung gebracht werden, wobei jede Korrekturvorrichtung mindestens einem Schritt zugeordnet ist. Erfindungsgemäß sind mindestens eine erste und eine zweite Korrekturvorrichtung so abgestimmt, dass die Form der zweiten Korrekturvorrichtung in einem nachfolgenden Schritt im Wesentlichen der Form der ersten Korrekturvorrichtung des vorherigen Schrittes entspricht. Für mindestens einen Schritt sind mindestens zwei Korrekturvorrichtungen vorgesehen. Der Satz von Korrekturvorrichtungen enthält vorzugsweise mindestens drei, beispielsweise mindestens fünf Korrekturvorrichtungen. Hierbei ist zu berücksichtigen, dass jede Korrekturvorrichtung mehrere Schritte der kieferorthopädischen Maßnahme durchführen kann.

Weitere vorteilhafte Ausführungsformen ergeben sich aus den Unteransprüchen.

Erfindungsgemäß weist die erste temporäre Form der zweiten Korrekturvorrichtung in bestimmten Abschnitten andere Wandstärken auf als die finale Form der ersten Korrekturvorrichtung. Hierdurch können bestimmte Bereiche des zu korrigierenden Teils des Gebisses mit einer stärkeren Kraft beaufschlagt werden.

Der Erfindung liegt die Erkenntnis zugrunde, dass bei einem Wechsel der Korrekturvorrichtung eine zumindest teilweise Wiederholung des letzten Schrittes für den weiteren Verlauf der kieferorthopädischen Maßnahme vorteilhaft ist. Tests haben ergeben, dass dann, wenn aufgrund der vorgeschilderten Gründe bei einem Schritt ein Teil des Gebisses nicht die gewünschte Form einnimmt, die Folgeschritte ebenfalls nicht mehr so genau ausgeführt werden. Hier schafft die Erfindung Abhilfe, indem zumindest teilweise ein Schritt zweimal mit aufeinanderfolgenden Korrekturvorrichtungen ausgeführt wird. Hierzu werden mindestens einmal während der kieferorthopädischen Maßnahme in zwei aufeinanderfolgenden Schritten zwei Korrekturvorrichtungen eingesetzt, die im Wesentlichen dieselbe Form aufweisen.

In herkömmlichen Verfahren wird jede Korrekturvorrichtung für einen gewissen Zeitraum von zum Beispiel 2 Wochen getragen. Der Zeitraum hängt von verschiedenen Faktoren wie zum Beispiel der Tragedauer der Korrekturvorrichtung während eines Tages und der geplanten Bewegung des Teils des Gebisses ab. Im Stand der Technik ergibt sich also die Abfolge S1, S2, S3, S4, S5, S6 usw., wobei S1 für den ersten Schritt, S2 für den zweiten Schritt usw. steht. Jeder Schritt wird durch eine Form einer Korrekturvorrichtung vorgegeben, die eine Soll-Stellung definiert. Im Gegensatz hierzu wird erfindungsgemäß mindestens ein Schritt wiederholt. In einem Ausführungsbeispiel lautet die Abfolge S1, S2, S3, S3', S4, S5, S5`, S6 usw. Der dritte und der fünfte Schritt werden also wiederholt. Hierzu werden zwei Korrekturvorrichtungen eingesetzt, die im Wesentlichen dieselbe Form aufweisen. Dies hat den Vorteil, dass für den Fall, dass im Schritt S3 nicht die gewünschte Soll-Stellung des Gebiss-Teils erreicht worden ist, bei der Wiederholung des Schritts S3 durch den Schritt 3' die gewünschte Soll-Stellung erreicht wird. Gleiches gilt für den Schritt S5. Die Wiederholung eines Schritts - vorliegend die Schritte S3 und S5 - erfolgt erfindungsgemäß mit jeweils einer neuen Korrekturvorrichtung.

Bei der Erfindung können herkömmliche Korrekturvorrichtungen aus Kunststoff zum Einsatz kommen, bei denen jedem Schritt eine Korrekturvorrichtung zugeordnet ist. Erfindungsgemäß weist die Korrekturvorrichtung ein dynamisches Material auf. Hierbei kann es sich zum Beispiel um ein Formgedächtnispolymer (SMP) oder eine Formgedächtnislegierung (SMA) handeln. Derartige dynamische Materialien sind auch als 4D-Materialien bekannt. Die Korrekturvorrichtung kann vollständig aus dem dynamischen Material bestehen oder lediglich in einem Teilabschnitt das dynamische Material aufweisen. Als Polymere kommen beispielsweise thermoplastische Elastomere auf Urethanbasis (TPU) oder mit Glycol modifiziertes Polyethylenterephthalat (PETG) in Betracht. Sie können mit Füllstoffen versetzt sein.

Das dynamische Material ist in der Lage, stabile temporäre Formen einzunehmen. Hierzu wird bei der Herstellung der Korrekturvorrichtung die Korrekturvorrichtung zunächst in eine finale Form gebracht. Anschließend wird die Korrekturvorrichtung mindestens in eine temporäre Form gebracht. Auch mehrere temporäre Formen sind möglich. Dieser Herstellungsvorgang ist bekannt. Um die Korrekturvorrichtung von der temporären Form in die finale Form zu bringen, wird das Material einem Reiz (Stimulus) ausgesetzt. Hierbei kann es sich zum Beispiel um Wasser und/oder Wärme handeln. Die DE 10 2015 108 848 A1 beschreibt ein dynamisches Material, das mit Wasser aktiviert wird. Die DE 10 2017 009 287 A1 beschreibt ein dynamisches Material, das mittels Wärme aktiviert wird. Sofern mehrere temporäre Formen vorgesehen sind, kann die Aktivierung auch mehrfach durchgeführt werden, wie es zum Beispiel aus der WO 2016/131827 A1 bekannt ist.

Mit dem dynamischen Material ist es also möglich, eine Korrekturvorrichtung - zum Beispiel eine Korrekturschiene - mit mehreren Schritten auszustatten. Jeder Schritt wird von einer Soll-Stellung der Korrekturvorrichtung vorgegeben, der einer gewünschten Zahnstellung entspricht.

Erfindungsgemäß sind mindestens eine erste und eine zweite kieferorthopädische Korrekturvorrichtung vorgesehen, die jeweils ein dynamisches Material aufweisen, wobei die erste und die zweite Korrekturvorrichtung jeweils eine finale Form und mindestens eine erste temporäre Form einnehmen können, und wobei die erste und die zweite Korrekturvorrichtung, wenn sie sich in ihrer ersten temporären Form befinden, durch eine Aktivierung des dynamischen Materials eine zweite temporäre Form oder ihre finale Form einnehmen. Es handelt sich also um eine Korrekturvorrichtung mit mindestens zwei Formen. Jede Form entspricht vorzugsweise einem Schritt. In jedem Schritt wird mindestens ein Zahn in eine Soll-Stellung gebracht. Bei der ersten temporären Form handelt es sich um die Ausgangsstellung der Korrekturvorrichtung. Nach der Aktivierung durch Wärme und/oder Wasser nimmt die Korrekturvorrichtung eine zweite temporäre (und ggf. weitere temporäre Stellungen) und schließlich die finale Form ein. Die erste und die zweite Korrekturvorrichtung sind vorzugsweise so abgestimmt, dass die erste temporäre Form der zweiten Korrekturvorrichtung im Wesentlichen der finalen Form der ersten Korrekturvorrichtung entspricht. Die vorstehend beschriebene Ausführungsform der Erfindung wird für sich genommen, also unabhängig von anderen Merkmalen, als gesonderte Erfindung und eigenständig schutzfähig betrachtet.

Bei der vorstehenden Ausführungsform kommt die Wiederholung eines Schritts besonders vorteilhaft zum Tragen. Zum einen wurde festgestellt, dass insbesondere 4D-Materialien nicht immer in ihre ursprüngliche Ausgangsstellung zurückkehren. In einigen Fällen werden weniger als 90% der Ausgangsstellung erreicht. Dies bedeutet aber auch, dass die Zähne nicht zu 100% ihre gewünschte Form einnehmen. Dadurch, dass der Schritt mit der finalen Form der ersten Korrekturvorrichtung durch die erste temporäre Form der nachfolgenden Korrekturvorrichtung wiederholt wird, kann eine weit höhere Genauigkeit der gesamten kieferorthopädischen Maßnahme erreicht werden.

Eine vorteilhafte Ausführungsform ist dadurch gekennzeichnet, dass die erste temporäre Form eine höhere Kraft auf den Teil des Gebisses aufbringt als die zweite temporäre Form und/oder die finale Form. Grundsätzlich werden gute Ergebnisse bei der Bewegung von Zähnen im Bereich zwischen 0,3 und 0,8 Newton/mm² erzielt. Bei der ersten temporären Form kann jedoch eine (deutlich) höhere Kraft aufgebracht werden, weil die erste temporäre Form der finalen Form der vorangehenden Korrekturvorrichtung entspricht, wie es als vorteilhaft vorgeschlagen wird. Der Zahn (oder Teil eines Gebisses) wird also nur noch wenig bewegt. Dies kann zur Erhöhung der Genauigkeit mit einer größeren Kraft erfolgen. In diesem Zusammenhang kann ferner vorteilhaft vorgesehen sein, dass die erste temporäre Form der zweiten Korrekturvorrichtung eine höhere Kraft auf den Teil des Gebisses aufbringt als die finale Form der ersten Korrekturvorrichtung. Es versteht sich, dass es sich bei dem Vergleich um dasselbe Gebiss im selben Zustand zum selben Zeitpunkt handelt.

Vorzugsweise wird zur Herstellung der finalen Form der ersten Korrekturvorrichtung dasselbe dreidimensionale Modell verwendet wie zur Herstellung der ersten temporären Form der zweiten Korrekturvorrichtung. Hierdurch wird eine hohe Übereinstimmung der finalen Form der ersten Korrekturvorrichtung und der ersten temporären Form der zweiten Korrekturvorrichtung gewährleistet.

Alternativ wird zur Herstellung der ersten temporären Form der zweiten Korrekturvorrichtung ein dreidimensionales Modell verwendet, dessen Form einem früheren Schritt der kieferorthopädischen Maßnahme entspricht als das dreidimensionale Modell der finalen Form der ersten Korrekturvorrichtung. Diese Variante wird man insbesondere dann anwenden, wenn die Korrekturvorrichtungen mehrfach, zum Beispiel fünffach oder zehnfach aktiviert werden können. Dann ist zu erwarten, dass die finale Form einer Korrekturvorrichtung nicht vollständig dem Ausgangszustand entspricht. Dies wird durch ein dreidimensionales Modell kompensiert, das einem früheren Schritt oder Teilschritt entspricht. Unter einem Teilschritt wird ein Zwischenschritt zwischen zwei Schritten verstanden.

Die Umformung von der finalen Form, die der permanenten Form einer Korrekturvorrichtung entspricht, zu einer temporären Form sollte möglichst schonend erfolgen. Vor diesem Hintergrund wird vorgeschlagen, dass zur Herstellung der ersten und/oder zweiten temporären Form der ersten und/oder der zweiten Korrekturvorrichtung die Korrekturvorrichtungen auf eine Temperatur erwärmt werden, die unterhalb der materialspezifischen Glastemperatur (Tg) liegt. Es wurde gefunden, dass hierdurch die Polymerkettenstruktur so weit wie möglich intakt gehalten werden kann. Vorzugsweise beträgt die Dauer der Erwärmung maximal 30 Sekunden, insbesondere maximal 10 Sekunden. Dies verhindert eine Zerstörung der Polymerketten.

Vorzugsweise wird die erste und oder die zweite Korrekturvorrichtung für mindestens 1 Minute, insbesondere für mindestens 10 Minuten, auf eine Temperatur unterhalb der materialspezifischen kritischen Temperatur (Tkrit) erwärmt. Hierdurch kann ein ungewolltes Kriechen des Materials verhindert und eine Ausrichtung der Polymerketten erreicht werden. Dies führt unter anderem zu einer geringeren Spannungsrelaxation. Die Erwärmung kann in einem Wasserbad erfolgen.

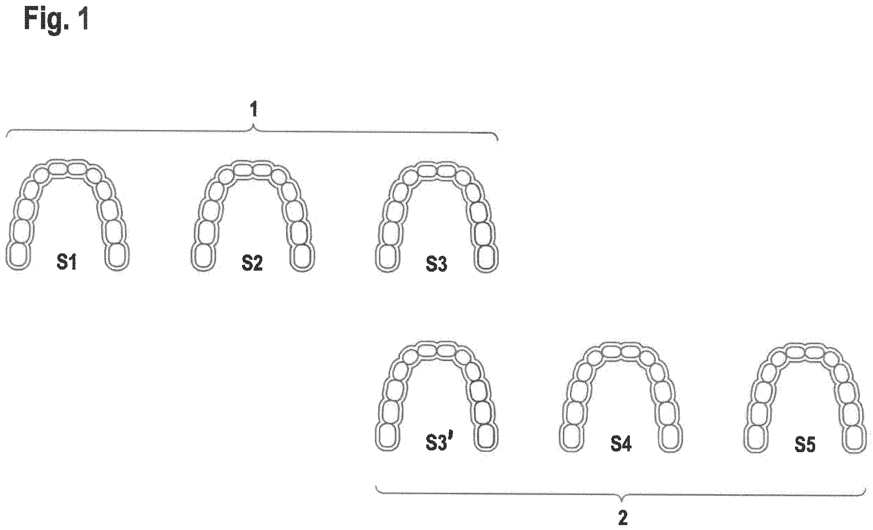

Im Folgenden wird die Erfindung anhand der anhängenden Zeichnung näher erläutert. Die Zeichnung zeigt in Figur 1 in einer schematischen Darstellung den Ablauf eines Verfahrens, welches jedoch nicht Teil der beanspruchten Erfindung ist.

Mit den Bezugszeichen S1, S2, S3, S3', S4 und S5 sind einzelne Schritte gekennzeichnet, in denen ein Teil des Gebisses oder das vollständige Gebiss in eine Soll-Stellung bewegt wird. In sechs Schritten soll also ein Teil des Gebisses oder das vollständige Gebiss von einer (vorhandenen) Ist-Stellung in eine korrigierte Soll-Stellung bewegt werden. Erfindungsgemäß wird mindestens ein Schritt - hier: Schritt S3 - wiederholt, und zwar vorliegend durch den Schritt S3`.

Die sechs Schritte werden durch eine erste Korrekturvorrichtung 1 und eine zweite Korrekturvorrichtung 2 zur Verfügung gestellt. Bei den Korrekturvorrichtungen handelt es sich um Clear Aligner. Die Erfindung ist aber auch mit festen Zahnspangen realisierbar. Dann ist der Draht, der mit den Brackets verbunden wird, die Korrekturvorrichtung.

Die erste Korrekturvorrichtung 1 weist eine finale Form S3 und zwei temporäre Formen S1 und S2 auf. Die zweite Korrekturvorrichtung 2 weist eine finale Form S5 und zwei temporäre Formen S3' und S4 auf. Erfindungsgemäß werden für mindestens einen Schritt - hier: Schritt S3 - zwei Korrekturvorrichtungen 1, 2 verwendet. Die beiden Korrekturvorrichtungen 1, 2 sind so abgestimmt, dass die erste temporäre Form S3' der zweiten Korrekturvorrichtung 2 im Wesentlichen der finalen Form S3 der ersten Korrekturvorrichtung entspricht. Mit dem Begriff "im Wesentlichen" sollen fertigungstechnische Toleranzen abgedeckt sein. Im Übrigen bezieht sich die Form auf die jeweils mit der Korrekturvorrichtung abgedeckte Zahn- bzw. Gebissstellung.

In Figur 1 sind lediglich zwei Korrekturvorrichtungen gezeigt. Im Rahmen der Erfindung können auch mehr Korrekturvorrichtungen vorgesehen sein. Grundsätzlich als vorteilhaft wird es angesehen, wenn jede erste temporäre Form S3' einer Korrekturvorrichtung 2 im Wesentlichen der finalen Form S3 einer vorangehenden Korrekturvorrichtung 1 entspricht.

Das gezeigte Ausführungsbeispiel ist lediglich exemplarisch.

Es können mehr oder weniger temporäre Formen jeder Korrekturvorrichtung vorgesehen sein. Auch können mehr, beispielsweise drei, vier, fünf oder mehr Korrekturvorrichtungen vorgesehen sein. Die Erfindung wurde anhand einer Zahnschiene (Clear Aligner) beschrieben. Als Korrekturvorrichtung kommt auch ein Draht einer feststehenden Zahnspange in Betracht. Im Übrigen sind die Formen der einzelnen Schritte S1 bis S5 der Einfachheit halber gleich dargestellt. Es versteht sich, dass sich in der Realität die Zahnstellungen jeweils leicht verschieben, bis im letzten Schritt - hier: S5 - die korrigierte Soll-Stellung des Gebisses eingenommen ist.

## Patentansprüche

1. Satz von kieferorthopädischen Korrekturvorrichtungen
- wobei mittels der Korrekturvorrichtungen (1; 2) mindestens ein Teil eines Gebisses in mehreren Schritten (S1, S2, S3, S3', S4, S5) in eine korrigierte Stellung gebracht werden soll,
- wobei jede Korrekturvorrichtung mindestens einem Schritt zugeordnet ist,
- wobei mindestens eine erste Korrekturvorrichtung (1) und eine zweite Korrekturvorrichtung (2) jeweils ein dynamisches Material aufweisen,
- wobei die erste und die zweite Korrekturvorrichtung jeweils eine finale Form (S3; S5) und mindestens eine erste temporäre Form (S1; S3`) einnehmen können,
- wobei die erste und die zweite Korrekturvorrichtung, wenn sie sich in ihrer ersten temporären Form (S1; S3`) befinden, durch eine Aktivierung des dynamischen Materials eine zweite temporäre Form (S2; S4) oder ihre finale Form (S3; S5) einnehmen,
- wobei die erste Korrekturvorrichtung (1) und die zweite Korrekturvorrichtung (2) so abgestimmt sind, dass die erste temporäre Form (S3') der zweiten Korrekturvorrichtung (2) im Wesentlichen der finalen Form (S3) der ersten Korrekturvorrichtung (1) entspricht,
**dadurch gekennzeichnet,**
- **dass** die erste temporäre Form (S3') der zweiten Korrekturvorrichtung (2) in bestimmten Abschnitten andere Wandstärken aufweist als die finale Form (S3) der ersten Korrekturvorrichtung (1).

2. Satz nach Anspruch 1, **dadurch gekennzeichnet, dass** die erste temporäre Form (S1; S3`) einer Korrekturvorrichtung (1; 2) so eingestellt ist, dass sie eine höhere Kraft auf einen Teil des Gebisses aufbringt als eine jeweilige zweite temporäre Form (S2; S4) und/oder die finale Form (S3; S5) der Korrekturvorrichtung (1; 2).

3. Satz nach Anspruch 1 oder 2, **dadurch gekennzeichnet, dass** die erste temporäre Form (S1; S3`) der zweiten Korrekturvorrichtung (2) so eingestellt ist, dass sie eine höhere Kraft auf den Teil des Gebisses aufbringt als die finale Form (S3) der ersten Korrekturvorrichtung.

## Claims

1. A set of orthodontic correction devices
- wherein at least part of a set of teeth is to be brought to a corrected position in a plurality of steps (S1, S2, S3, S3', S4, S5) by means of the correction devices (1; 2),
- wherein each correction device is assigned to at least one step,
- wherein at least a first correction device (1) and a second correction device (2) each comprise a dynamic material,
- wherein the first and the second correction device can each assume a final shape (S3; S5) and at least one first temporary shape (S1; S3'),
- wherein the first and the second correction device, when in their first temporary shape (S1; S3'), assume a second temporary shape (S2; S4) or their final shape (S3; S5) as a result of activation of the dynamic material,
- wherein the first correction device (1) and the second correction device (2) are matched so that the first temporary shape (S3') of the second correction device (2) corresponds essentially to the final shape (S3) of the first correction device (1),
**characterized in that**
- the first temporary shape (S3') of the second correction device (2) has different wall thicknesses in particular sections compared to the final shape (S3) of the first correction device (1) .

2. Set according to Claim 1, **characterized in that** the first temporary shape (S1; S3') of a correction device (1; 2) is configured so that it exerts a greater force on a part of the set of teeth than a respective second temporary shape (S2; S4) and/or the final shape (S3; S5) of the correction device (1; 2).

3. Set according to Claim 1 or 2, **characterized in that** the first temporary shape (S1; S3') of the second correction device (2) is configured so that it exerts a greater force on the part of the set of teeth than the final shape (S3) of the first correction device.

## Revendications

1. Ensemble de dispositifs de correction orthodontique
- au moyen des dispositifs de correction (1 ; 2), au moins une partie d'une dentition devant être amenée dans une position corrigée en plusieurs étapes (S1, S2, S3, S3', S4, S5),
- chaque dispositif de correction étant associé à au moins une étape,
- au moins un premier dispositif de correction (1) et un deuxième dispositif de correction (2) comprenant chacun un matériau dynamique,
- les premier et deuxième dispositifs de correction pouvant chacun prendre une forme finale (S3 ; S5) et au moins une première forme temporaire (S1 ; S3'),
- les premier et deuxième dispositifs de correction, lorsqu'ils se trouvent dans leur première forme temporaire (S1 ; S3'), prenant une deuxième forme temporaire (S2 ; S4) ou leur forme finale (S3 ; S5) par une activation du matériau dynamique,
- le premier dispositif de correction (1) et le deuxième dispositif de correction (2) étant accordés de telle sorte que la première forme temporaire (S3') du deuxième dispositif de correction (2) correspond essentiellement à la forme finale (S3) du premier dispositif de correction (1),
**caractérisé en ce que**
- la première forme temporaire (S3') du deuxième dispositif de correction (2) présente, dans certaines sections, des épaisseurs de paroi différentes de celles de la forme finale (S3) du premier dispositif de correction (1).

2. Ensemble selon la revendication 1, **caractérisé en ce que** la première forme temporaire (S1 ; S3') d'un dispositif de correction (1 ; 2) est ajustée de manière à appliquer une force plus élevée sur une partie de la dentition qu'une deuxième forme temporaire respective (S2 ; S4) et/ou que la forme finale (S3 ; S5) du dispositif de correction (1 ; 2).

3. Ensemble selon la revendication 1 ou 2, **caractérisé en ce que** la première forme temporaire (S1 ; S3') du deuxième dispositif de correction (2) est ajustée de manière à appliquer une force plus élevée à la partie de la dentition que la forme finale (S3) du premier dispositif de correction.
